# EUROPÄISCHE PATENTSCHRIFT

(11) **EP 2 856 084 B1**
(45) Veröffentlichungstag und Bekanntmachung des Hinweises auf die Patenterteilung: **19.07.2017**
(21) Anmeldenummer: 13732376.2
(22) Anmeldetag: 03.06.2013
(51) Int. Cl.: G01F 1/36, G01F 1/40

(54) **VORRICHTUNG ZUR DIFFERENZDRUCKMESSUNG**
DEVICE FOR MEASURING DIFFERENTIAL PRESSURE
DISPOSITIF DE MESURE DE PRESSION DIFFÉRENTIELLE

(30) Priorität: 04.06.2012 DE 202012102034 U
(43) Veröffentlichungstag der Anmeldung: 08.04.2015
(73) Patentinhaber: Postberg + Co. Druckluft-Controlling GmbH, 34121 Kassel (DE)
(72) Erfinder: POSTBERG, Hans-Jürgen, 61231 Bad Nauheim (DE); OTTO, Peter, 34121 Kassel (DE)
(74) Vertreter: Bossmeyer, Jörg Peter
(86) Internationale Anmeldenummer: PCT/EP2013/061415
(87) Internationale Veröffentlichungsnummer: WO 2013/182532

(56) Entgegenhaltungen:
- WO-A1-2012/067604
- US-A- 3 410 138
- US-A- 5 533 549
- US-A1- 2004 118 219

## Beschreibung

Die Erfindung betrifft eine Vorrichtung zur Differenzdruckmessung in einem strömenden Fluid, mit einem zwei koaxiale Öffnungen und einen Innenraum aufweisenden Gehäuse, der durch die oder zumindest eine der Öffnungen zugänglich ist, einer in dem Gehäuse angeordneten und einen Durchflusskanal mit einer Querschnittsverengung aufweisenden Messdüse, einem zwei Messeingänge aufweisenden Differenzdrucksensor, mittels welchem eine Differenz zwischen an den Messeingängen anstehenden Drücken messbar ist, wobei ein erster der Messeingänge mit dem Durchflusskanal und ein zweiter der Messeingänge außerhalb der Messdüse mit dem Innenraum in Verbindung steht, und einem die Messdüse umfassenden und in dem Gehäuse um eine Drehachse drehbar gelagerten Absperrkörper, mittels welchem in einer ersten Drehwinkelstellung der Durchflusskanal an die beiden Öffnungen angeschlossen ist und in einer zweiten Drehwinkelstellung ein Durchfluss zwischen den beiden Öffnungen gesperrt ist.

Eine derartige Vorrichtung ist z.B. in einer Druckluftanlage vorhanden und kann zur Durchflussmessung eingesetzt werden. Da bei einer Druckluftanlage in der Regel mehrere Absperr- und Messarmaturen zu installieren sind, besteht der Wunsch, den Installationsaufwand möglichst gering halten zu können.

Die WO 2012/067604 A1 offenbart einen Kugelhahn mit einem Gehäuse, einem Gehäusedeckel, einem Ventilschaft und einem Ventilglied in Form einer Kugel, die einen beschränkten Durchgang mit einem Profil vom Venturi-Typ aufweist. In einem geöffneten Zustand des Kugelhahns fluchtet der beschränkte Durchgang mit einem im Gehäuse vorgesehenen Strömungspfad. Durch Drehen des Ventilschaftes um 90° kann der Kugelhahn in einen geschlossenen Zustand überführt werden. In der Kugel sind ein Drucksensor und ein Kanal zum elektrischen Übertragen des erfassten Drucks vorgesehen. Zusätzlich sind zum Messen des unbeschränkten Drucks ein Sensor und ein Kanal in dem Gehäuse vorgesehen.

Die US 5 533 549 A offenbart einen Kugelhahn mit einem zwei koaxiale Öffnungen und einen Innenraum aufweisenden Gehäuse, der durch die Öffnungen zugänglich ist, einer in dem Gehäuse angeordneten und einen Durchflusskanal aufweisenden Venturi-Düse und zwei in dem Gehäuse vorgesehenen Messausgängen, wobei ein erster der Messausgänge mit dem Durchflusskanal und ein zweiter der Messausgänge außerhalb der Venturi-Düse mit einem Bereich des Innenraums in Verbindung steht. In dem Gehäuse ist zu der Venturi-Düse versetzt eine Ventilkugel drehbar gelagert, in der ein Durchgangsloch vorgesehen ist, wobei in einer ersten Drehwinkelstellung der Ventilkugel das Durchgangsloch an die beiden Öffnungen angeschlossen ist und in einer zweiten Drehwinkelstellung der Ventilkugel ein Durchfluss zwischen den beiden Öffnungen gesperrt ist. In der Venturi-Düse ist eine in den Durchflusskanal einmündende Druckentnahmebohrung vorgesehen, die in Verbindung mit einer am Außenumfang der Venturi-Düse vorgesehenen Umfangsnut steht, an welcher der erste Messausgang angeschlossen ist. Ferner ist in dem Gehäuse ein Entlüftungsloch vorgesehen, welches in einen zwischen der Ventilkugel und dem Gehäuse vorgesehenen Freiraum einmündet, der durch Drehen der Ventilkugel mit dem Durchgangsloch in Verbindung gebracht werden kann.

Die US 3 410 138 A beschreibt einen Durchflussmesser mit zwei in einer Rohrleitung hintereinander angeordneten Primär-Messelementen und einem einen Differenzdruckumformer umfassenden Sekundärelement. Ein erstes der Primär-Messelemente umfasst zwei in der Wandung der Rohrleitung vorgesehene Messabgriffe sowie eine Messblende, die in einem sich durch den Flügel eines zwischen den Messabgriffen angeordneten Schmetterlingsventils hindurch erstreckenden Durchflusskanal montiert ist. Das zweite Primär-Messelement umfasst ebenfalls zwei in der Wandung der Rohrleitung vorgesehene Messabgriffe sowie ein in der Rohrleitung vorgesehenes Mittel zur Strömungsquerschnittsverengung, wie z.B. eine Venturi-Düse. Einer der Messabgriffe des zweiten Primär-Messelements ist dabei im Bereich der Querschnittsverengung vorgesehen, wohingegen der andere Messabgriff des zweiten Primär-Messelements im Abstand zu der Querschnittsverengung vorgesehen ist. Die Messabgriffe sind über Ventile wahlweise mit den Eingängen des Differenzdruckumformers verbindbar.

Ausgehend hiervon liegt der Erfindung die Aufgabe zugrunde, den Installationsaufwand für Druckluftanlagen mit wenigstens einem Absperrhahn und wenigstens einem Differenzdrucksensor zu reduzieren.

Diese Aufgabe wird erfindungsgemäß durch eine Vorrichtung nach Anspruch 1 gelöst. Bevorzugte Weiterbildungen der Erfindung sind in den Unteransprüchen gegeben.

Die erfindungsgemäße Vorrichtung zur Differenzdruckmessung in einem strömenden Fluid umfasst ein zwei koaxiale Öffnungen und einen Innenraum aufweisendes Gehäuse, der durch die oder zumindest eine der Öffnungen zugänglich ist, eine in dem Gehäuse angeordnete und einen Durchflusskanal mit einer Querschnittsverengung aufweisende Messdüse, einen zwei Messeingänge aufweisenden Differenzdrucksensor, mittels welchem eine Differenz zwischen an den Messeingängen anstehenden Drücken messbar ist, wobei ein erster der Messeingänge mit dem Durchflusskanal und ein zweiter der Messeingänge außerhalb der Messdüse mit dem Innenraum in Verbindung steht, und einen die Messdüse umfassenden und in dem Gehäuse um eine Drehachse drehbar gelagerten Absperrkörper, mittels welchem in einer ersten Drehwinkelstellung der Durchflusskanal an die beiden Öffnungen angeschlossen ist und in einer zweiten Drehwinkelstellung ein Durchfluss zwischen den beiden Öffnungen gesperrt ist, wobei in der Wandung des Absperrkörpers ein in den Durchflusskanal einmündendes Druckentnahmeloch vorgesehen ist, welches zumindest in der ersten Drehwinkelstellung mit einem zwischen dem Absperrkörper und dem Gehäuse vorgesehenen Freiraum in Verbindung steht, an den der erste Messeingang angeschlossen ist.

Die erfindungsgemäße Vorrichtung umfasst oder bildet einen Absperrhahn, der zusätzlich zu seiner Absperrfunktion eine Differenzdruckmessung in dem strömenden Fluid ermöglicht. Bei dem Fluid handelt es sich insbesondere um Druckluft. Gegenüber einer getrennten Installation von Absperrhahn und Differenzdrucksensor in einer Druckluftanlage kann somit der Installationsaufwand reduziert werden.

Die zweite Drehwinkelstellung ist gegenüber der ersten Drehwinkelstellung insbesondere um 90° oder um näherungsweise 90° um die Drehachse verdreht. Die Achse der koaxialen Öffnungen bildet bevorzugt eine Längsachse des Gehäuses. Die Richtung der Achse der koaxialen Öffnungen wird insbesondere als axiale Richtung bezeichnet. Unter einer radialen Richtung ist bevorzugt eine oder jedwede Richtung zu verstehen, die senkrecht zur Achse der koaxialen Öffnungen verläuft. Vorzugsweise ist der Absperrkörper zwischen den koaxialen Öffnungen angeordnet, insbesondere in axialer Richtung. Der Innenraum ist beispielsweise zwischen dem Absperrkörper und einer der koaxialen Öffnungen vorgesehen. Bevorzugt verläuft die Drehachse senkrecht oder im Wesentlichen senkrecht zur Achse der koaxialen Öffnungen.

Die Messdüse ist insbesondere durch den Absperrkörper gebildet. Bevorzugt erstreckt sich der Durchflusskanal senkrecht zur Drehachse durch den Absperrkörper hindurch. Vorteilhaft ist die Querschnittsverengung in dem Durchflusskanal eine lokale Querschnittsverengung. Darunter ist insbesondere zu verstehen, dass der Querschnitt des Durchflusskanals an seinen Enden größer als im Bereich der zwischen diesen Enden liegenden Querschnittsverengung ist. Vorteilhaft ist der Querschnitt des Innenraums größer als der Querschnitt des Durchflusskanals im Bereich der Querschnittsverengung. Bevorzugt bildet die Messdüse eine Drossel. Insbesondere ist die Messdüse eine Venturi-Düse. Vorteilhaft ist mittels der erfindungsgemäßen Vorrichtung eine Durchflussmessung, vorzugsweise eine Venturi-Durchflussmessung durchführbar.

Bevorzugt verläuft durch das Gehäuse ein die Öffnungen und den Innenraum umfassender Strömungskanal hindurch, in dem insbesondere der Absperrkörper angeordnet ist. Vorzugsweise erstreckt sich der Strömungskanal in axialer Richtung. Insbesondere erstreckt sich der Strömungskanal zwischen den Öffnungen. In der ersten Drehwinkelstellung ermöglicht der Absperrkörper bevorzugt einen Durchfluss des oder eines Fluids durch den Strömungskanal. Insbesondere ist der Durchflusskanal in der ersten Drehwinkelstellung in den Strömungskanal geschaltet und/oder bildet einen Teil desselben. Vorteilhaft verläuft der Durchflusskanal in der ersten Drehwinkelstellung in axialer Richtung. In der zweiten Drehwinkelstellung sperrt der Absperrkörper bevorzugt einen Durchfluss des Fluids durch den Strömungskanal. Das Sperren des Strömungskanals erfolgt insbesondere mittels der Wandung des Absperrkörpers. Vorzugsweise verläuft der Durchflusskanal in der zweiten Drehwinkelstellung quer zum Strömungskanal.

In der ersten Drehwinkelstellung weist der Strömungskanal im Bereich der Querschnittsverengung bevorzugt seinen kleinsten Querschnitt auf. Vorteilhaft ist der Querschnitt des Strömungskanals außerhalb der Querschnittsverengung größer als im Bereich der Querschnittsverengung, insbesondere in der ersten Drehwinkelstellung.

Der Absperrkörper weist bevorzugt eine Lagerfläche auf, die gleitfähig an einer oder mehreren, vorzugsweise zwei, Gegenlagerflächen anliegt, die insbesondere im Gehäuse vorgesehen sind. Der Absperrkörper ist somit mittels seiner Lagerfläche an der oder den Gegenlagerflächen um die Drehachse drehbar im Gehäuse gelagert. Bevorzugt umfasst oder bildet der Absperrkörper eine Kugel, durch welche sich der Durchflusskanal hindurch erstreckt. Vorzugsweise liegt der Mittelpunkt dieser Kugel auf der Achse der koaxialen Öffnungen. Insbesondere bildet die Lagerfläche eine Kugelfläche oder einen Teil einer Kugelfläche. Ein solcher Absperrkörper wird auch als Absperrkugel bezeichnet. Die erfindungsgemäße Vorrichtung umfasst oder bildet somit einen Kugelhahn. Bevorzugt bilden auch die eine oder mehreren Gegenlagerflächen jeweils eine Kugelfläche oder einen Teil einer Kugelfläche. Vorzugsweise liegen die eine oder die mehreren Gegenlagerflächen auf einer Kugelfläche, auf der insbesondere auch die Lagerfläche liegt oder zumindest näherungsweise liegt. Der Absperrkörper besteht bevorzugt aus Metall, insbesondere aus Stahl.

In der Wandung des Absperrkörpers ist das in den Durchflusskanal einmündende Druckentnahmeloch vorgesehen. Der erste Messeingang kann direkt oder indirekt an diesem Druckentnahmeloch angeschlossen sein. Das Druckentnahmeloch steht zumindest in der ersten Drehwinkelstellung mit dem zwischen dem Absperrkörper und dem Gehäuse vorgesehenen Freiraum in Verbindung, an den der erste Messeingang angeschlossen ist. Der erste Messeingang ist somit indirekt, nämlich unter Zwischenschaltung des Freiraums, an das in den Durchflusskanal einmündende Druckentnahmeloch angeschlossen. Somit kann auf einfache Weise die Drehbarkeit des Absperrkörpers, und somit auch der Messdüse, berücksichtigt werden, ohne eine flexible Verbindungsleitung oder dergleichen einsetzen zu müssen. Der Freiraum ist insbesondere umlaufend ausgebildet.

Gemäß einer Weiterbildung der Erfindung sitzt der Absperrkörper zwischen zwei in dem Gehäuse angeordneten Gleitringen. Insbesondere liegt der Absperrkörper gleitfähig an diesen Gleitringen an. Der Absperrkörper ist somit mittels der Gleitringe um die Drehachse drehbar in dem Gehäuse gelagert. Die Gleitringe bilden in diesem Sinne einen zweiteiligen Lagersitz für den Absperrkörper. Bevorzugt bestehen die Gleitringe aus Kunststoff oder aus Metall. Der Freiraum ist vorzugsweise zwischen den Gleitringen vorgesehen. Die Gegenlagerflächen sind insbesondere an den Gleitringen vorgesehen.

Gemäß einer Ausgestaltung der Erfindung weist das Gehäuse einen den Absperrkörper aufnehmenden ersten Gehäuseteil und einen zweiten Gehäuseteil auf, der insbesondere fest mit dem ersten Gehäuseteil verbunden und vorteilhaft zumindest teilweise in dem ersten Gehäuseteil angeordnet ist. Alternativ kann z.B. der erste Gehäuseteil auch zumindest teilweise in dem zweiten Gehäuseteil angeordnet sein. Der Innenraum erstreckt sich bevorzugt in den ersten und/oder in den zweiten Gehäuseteil hinein und/oder durch diesen oder diese hindurch und/oder ist in diesem oder diesen vorgesehen. Vorteilhaft sichert der zweite Gehäuseteil den Absperrkörper in dem Gehäuse, insbesondere in dem ersten Gehäuseteil. Bevorzugt ist der Absperrkörper in dem ersten Gehäuseteil in axialer Richtung zwischen einer in dem ersten Gehäuseteil vorgesehenen Anlage und dem zweiten Gehäuseteil gesichert. Diese Anlage kann z.B. in Form einer radialen Innenschulter in dem ersten Gehäuseteil vorgesehen sein.

Der zweite Gehäuseteil kann als in den ersten Gehäuseteil eingesetzter Ring oder Sicherungsring ausgebildet sein. Vorteilhaft ist der zweite Gehäuseteil in den ersten Gehäuseteil eingeschraubt. Insbesondere erstreckt sich der zweite Gehäuseteil aus dem ersten Gehäuseteil heraus, vorzugsweise in axialer Richtung. Bevorzugt bildet der zweite Gehäuseteil ein Anschlussstück oder einen Flansch, an welches oder welchen eine Fluidleitung anschließbar ist. Vorzugsweise umfasst der zweite Gehäuseteil eine der koaxialen Öffnungen, durch welche insbesondere der Innenraum zugänglich ist. Die andere der koaxialen Öffnungen ist z.B. in dem ersten Gehäuseteil vorgesehen. Der zweite Gehäuseteil ist bevorzugt als Hohlkörper ausgebildet, dessen Hohlraum in axialer Richtung insbesondere durchgehend ist und vorzugsweise den Innenraum umfasst oder bildet. Vorteilhaft verläuft der Strömungskanal durch den Hohlraum des zweiten Gehäuseteils. Ferner ist der erste Gehäuseteil bevorzugt als Hohlkörper ausgebildet, dessen Hohlraum in axialer Richtung insbesondere durchgehend ist. Insbesondere verläuft der Strömungskanal durch den Hohlraum des ersten Gehäuseteils. Vorteilhaft geht der Hohlraum des ersten Gehäuseteils in den Hohlraum des zweiten Gehäuseteils über. Bevorzugt ist der erste Gehäuseteil zylindrisch oder im Wesentlichen zylindrisch ausgebildet. Insbesondere ist der Absperrkörper im Hohlraum des ersten Gehäuseteils angeordnet. Vorzugsweise ist der zweite Gehäuseteil zumindest teilweise im Hohlraum des ersten Gehäuseteils angeordnet. Bevorzugt sind auch die Gleitringe im Hohlraum des ersten Gehäuseteils angeordnet.

Gemäß einer Weiterbildung der Erfindung ist ein dritter Gehäuseteil vorgesehen, der insbesondere fest mit dem ersten Gehäuseteil verbunden und vorteilhaft zumindest teilweise in dem ersten Gehäuseteil angeordnet ist. Alternativ kann z.B. der erste Gehäuseteil auch zumindest teilweise in dem dritten Gehäuseteil angeordnet sein. Die in dem ersten Gehäuseteil vorgesehene Anlage ist vorzugsweise durch den dritten Gehäuseteil gebildet. Der dritte Gehäuseteil kann als in dem ersten Gehäuseteil eingesetzter Ring oder Sicherungsring ausgebildet sein. Vorteilhaft ist der dritte Gehäuseteil in den ersten Gehäuseteil eingeschraubt. Insbesondere erstreckt sich der dritte Gehäuseteil aus dem ersten Gehäuseteil heraus, vorzugsweise in axialer Richtung. Bevorzugt bildet der dritte Gehäuseteil ein Anschlussstück oder einen Flansch, an welches oder welchen eine Fluidleitung anschließbar. Der dritte Gehäuseteil ist bevorzugt als Hohlkörper ausgebildet, dessen Hohlraum in axialer Richtung insbesondere durchgehend ist. Vorzugsweise verläuft der Strömungskanal durch den Hohlraum des dritten Gehäuseteils. Vorteilhaft geht der Hohlraum des ersten Gehäuseteils in den Hohlraum des dritten Gehäuseteils über. Bevorzugt ist der dritte Gehäuseteil zumindest teilweise im Hohlraum des ersten Gehäuseteils angeordnet. Insbesondere umfasst der dritte Gehäuseteil die andere der koaxialen Öffnungen.

Der zweite und der dritte Gehäuseteil sind vorzugsweise koaxial angeordnet und weisen in axialer Richtung bevorzugt einen Abstand zueinander auf. Der zweite und der dritte Gehäuseteil sind in axialer Richtung insbesondere auf unterschiedlichen Seiten des ersten Gehäuseteils angeordnet, vorzugsweise in dieses eingeschraubt. Bevorzugt erstrecken sich der zweite und der dritte Gehäuseteil auf in axialer Richtung unterschiedlichen Seiten aus dem ersten Gehäuseteil heraus. Der Freiraum ist vorzugsweise zwischen dem zweiten Gehäuseteil und der Anlage und/oder dem dritten Gehäuseteil vorgesehen. Insbesondere umfassen der zweite und der dritte Gehäuseteil jeweils eine der Öffnungen. Vorteilhaft liegt ein erster der Gleitringe axial an dem zweiten Gehäuseteil und ein zweiter der Gleitringe axial an der Anlage und/oder an dem dritten Gehäuseteil an. Insbesondere verläuft der Strömungskanal durch den ersten Gehäuseteil und/oder den zweiten Gehäuseteil und/oder den dritten Gehäuseteil.

Das Gehäuse besteht bevorzugt aus Metall, insbesondere aus Stahl. Vorzugsweise bestehen der erste Gehäuseteil und/oder der zweite Gehäuseteil und/oder der dritte Gehäuseteil jeweils aus Metall, insbesondere aus Stahl.

Gemäß einer Weiterbildung der Erfindung ist in der Wandung des ersten oder des zweiten Gehäuseteils ein in den Innenraum einmündendes Druckentnahmeloch vorgesehen, welches mit einem zwischen dem ersten Gehäuseteil und dem zweiten Gehäuseteil vorgesehenen Ringraum in Verbindung steht, an den der zweite Messeingang angeschlossen ist. Da die Verbindung zwischen dem Innenraum und dem zweiten Messeingang unter Zwischenschaltung des Ringraums erfolgt, ist eine einfache Montage des zweiten Gehäuseteils möglich, da es nicht in einer bestimmten Drehwinkelstellung relativ zu dem ersten Gehäuseteil orientiert sein muss, um eine Verbindung zwischen dem Innenraum und dem zweiten Messeingang sicherzustellen. Der Ringraum ist vorzugsweise durch eine in dem zweiten Gehäuseteil eingebrachte Ringnut gebildet. Alternativ oder ergänzend kann der Ringraum aber auch durch eine in dem ersten Gehäuseteil eingebrachte Ringnut gebildet sein.

Gemäß einer Ausgestaltung der Erfindung ist in der Wandung des Absperrkörpers ein in den Durchflusskanal einmündendes Sensoraufnahmeloch vorgesehen, durch welches hindurch sich ein anderer Sensor in den Durchflusskanal hinein erstreckt. Somit ist es möglich, zusätzlich zu der Differenzdruckmessung eine andere Messung in dem Fluid durchzuführen. Das Sensoraufnahmeloch erstreckt sich bevorzugt entlang der Drehachse. Somit ist es möglich, den Absperrkörper zu drehen, ohne den anderen Sensor ausbauen zu müssen.

Der andere Sensor kann z.B. als Drucksensor und/oder als Temperatursensor und/oder als Durchflusssensor ausgebildet sein. Mittels des anderen Sensors ist insbesondere wenigstens eine physikalische Eigenschaft des Fluids messbar, wie z.B. der Druck und/oder die Temperatur und/oder der Volumenstrom und/oder der Massenstrom. Bevorzugt bildet der andere Sensor einen thermischen oder kalorimetrischen Durchflusssensor. Dies hat den Vorteil, dass mittels der Vorrichtung sowohl eine auf einer Differenzdruckmessung basierende Durchflussmessung als auch eine auf einer thermischen oder kalorimetrischen Messung basierende Durchflussmessung durchführbar ist. Da die höchsten Genauigkeiten beider Durchflussmessungen in unterschiedlichen Strömungsgeschwindigkeitsbereichen des Fluids liegen, ermöglicht die erfindungsgemäße Vorrichtung über einen großen Bereich von Strömungsgeschwindigkeiten eine relativ genaue Durchflussmessung. Ferner ist es möglich, eine mittels des thermischen oder kalorimetrischen Durchflusssensors durchgeführte Durchflussmessung durch eine mittels des Differenzdrucksensors durchgeführte Durchflussmessung zu verifizieren. Die beiden Messungen werden vorzugsweise gleichzeitig oder nacheinander durchgeführt. Ferner ist es möglich, eine mittels des Differenzdrucksensors durchgeführte Durchflussmessung durch eine mittels des thermischen oder kalorimetrischen Durchflusssensors durchgeführte Durchflussmessung zu verifizieren. Auch diese beiden Messungen werden vorzugsweise gleichzeitig oder nacheinander durchgeführt. Durch die Integration des anderen Sensors in die erfindungsgemäße Vorrichtung kann der Installationsaufwand bei einer Druckluftanlage weiter reduziert werden.

Gemäß einer Weiterbildung der Erfindung ist an oder in dem Gehäuse wenigstens ein zusätzlicher Sensor vorgesehen, der z.B. als Drucksensor und/oder als Temperatursensor ausgebildet ist. Mittels des zusätzlichen Sensors ist insbesondere wenigstens eine physikalische Eigenschaft des Fluids messbar, wie z.B. der Druck und/oder die Temperatur.

Bevorzugt ist eine Betätigungseinrichtung vorgesehen, mittels welcher der Absperrkörper um die Drehachse drehbar ist. Die Betätigungseinrichtung umfasst insbesondere ein mechanisch mit dem Absperrkörper verbundenes Betätigungselement, welches sich vorzugsweise durch eine ein dem Gehäuse vorgesehene Betätigungsausnehmung hindurch aus dem Gehäuse heraus erstreckt. Bevorzugt ist die Betätigungsausnehmung in dem ersten Gehäuseteil vorgesehen. Vorteilhaft ist das Betätigungselement bezüglich der Drehachse drehstarr mit dem Absperrkörper verbunden. Bevorzugt umfasst die Betätigungseinrichtung einen Antrieb, mittels welchem der Absperrkörper um die Drehachse drehbar und/oder das Betätigungselement zum Drehen des Absperrkörpers betätigbar ist. Der Antrieb ist insbesondere mit dem Betätigungselement gekoppelt. Beispielsweise ist der Antrieb als elektrischer, als hydraulischer oder als pneumatischer Antrieb ausgebildet. Insbesondere umfasst der Antrieb einen Motor mit einer Motorwelle, wobei das Betätigungselement bevorzugt mechanisch mit der Welle gekoppelt oder durch diese gebildet ist.

Für Durchflussmessungen ist es in der Regel erforderlich, eine sogenannte Einlaufstrecke vorzusehen, damit am Messort möglichst keine oder wenig Wirbel auftreten, welche die Genauigkeit der Durchflussmessung beeinträchtigen können. Solche Einlaufstrecken sind in der Regel sehr lang, sodass die Durchflussmessung viel Platz erfordert. Dieser Platz steht in der Praxis aber nicht immer zur Verfügung, sodass der Wunsch besteht, die Einlaufstrecke verkürzen zu können.

Gemäß einer Weiterbildung der Erfindung ist ein Strömungsgleichrichter an eine der koaxialen Öffnungen angeschlossen, wobei der zweite Messeingang vorzugsweise zwischen dieser Öffnung oder dem Strömungsgleichrichter und dem Absperrkörper und/oder der Messdüse mit dem Innenraum in Verbindung steht. Der Strömungsgleichrichter glättet insbesondere die Strömung des Fluids. Bevorzugt ist der Strömungsgleichrichter unter Zwischenschaltung einer Fluidleitung an diese Öffnung angeschlossen. Diese Fluidleitung bildet bevorzugt eine Einlaufstrecke, der insbesondere der Strömungsgleichrichter zugerechnet werden kann. Diese Einlaufstrecke kann deutlich kürzer als eine Einlaufstrecke ohne Strömungsgleichrichter ausgebildet werden.

Gemäß einer Weiterbildung ist der Strömungsgleichrichter in einem Strömungsgleichrichtergehäuse angeordnet, an dem zwei Prüfanschlüsse vorgesehen sind, an welche ein Strömungsgleichrichter-Differenzdrucksensor anschließbar oder angeschlossen ist. Die Prüfanschlüsse bilden jeweils eine Verbindung zu einem in dem Strömungsgleichrichtergehäuse vorgesehenen, durchgehenden Hohlraum, in dem der Strömungsgleichrichter angeordnet ist. Insbesondere münden die Prüfanschlüsse auf unterschiedlichen Seiten des Strömungsgleichrichters in den Hohlraum ein. Durch den Strömungsgleichrichter-Differenzdrucksensor ist die Differenz aus Drücken des strömenden Fluids vor und hinter dem Strömungsgleichrichter messbar ist, sodass aufgrund der gemessenen Druckdifferenz eine Verschmutzung des Strömungsgleichrichters erfassbar ist.

Gemäß einer Ausgestaltung umfasst der Strömungsgleichrichter ein Band, welches in Richtung seiner Längserstreckung wellenförmig ausgebildet und zu einer Spirale aufgewickelt ist. Bevorzugt ist das Band abwechselnd mit Erhebungen und Vertiefungen versehen, die parallel zur Mittelachse der Spirale verlaufende, durchgehende Strömungspfade bilden. Zwischen den Wicklungen des Bands ist vorzugsweise ein Zwischenband vorgesehen, welches zusammen mit dem Band zu der Spirale aufgewickelt ist. Die Strömungspfade verlaufen somit zwischen dem wellenförmigen Band und dem Zwischenband. Vorzugsweise ist das Zwischenband flach ausgebildet. Insbesondere weist das Zwischenband keinen wellenförmigen Verlauf auf. Bevorzugt sind das Band und das Zwischenband übereinander gelegt und zusammen zu der Spirale aufgewickelt. Vorteilhaft liegen die Wicklungen des Zwischenbands zwischen den Wicklungen des wellenförmigen Bands. Die Spirale wird vorzugsweise von einer Schelle, einem Haltering oder einer Klammer zusammengehalten. Das Band und/oder das Zwischenband bestehen bevorzugt aus Metall, insbesondere aus Blech.

Der vorgenannte Strömungsgleichrichter weist im Vergleich zu herkömmlichen Strömungsgleichrichtern einen deutlich geringeren Strömungswiderstand auf. Insbesondere kann der Strömungsgleichrichter auch separat von der erfindungsgemäßen Vorrichtung vorgesehen sein und/oder den Gegenstand dieser oder einer separaten Anmeldung bilden. Dafür ist z.B. eine Messanordnung für ein Fluid vorgesehen, welche eine Fluidleitung, einen oder den an die Fluidleitung angeschlossenen Strömungsgleichrichter und einen an die Fluidleitung angeschlossenen Sensor umfasst, der im Abstand zu dem Strömungsgleichrichter vorgesehen ist und vorzugsweise einen Durchflusssensor bildet. Dieser Strömungsgleichrichter kann gemäß allen beschriebenen Ausgestaltungen weitergebildet sein. Ferner kann die Messanordnung durch die erfindungsgemäße Vorrichtung gebildet sein oder diese umfassen. Beispielsweise ist der an die Fluidleitung angeschlossene Sensor durch den Differenzdrucksensor oder durch den anderen Sensor der erfindungsgemäßen Vorrichtung gebildet, sodass der Strömungsgleichrichter insbesondere unter Zwischenschaltung der Fluidleitung an die erfindungsgemäße Vorrichtung angeschlossen ist.

Gemäß einer Ausgestaltung der Erfindung ist eine Auswerteeinheit vorgesehen, an welche insbesondere der Differenzdrucksensor, vorzugsweise elektrisch, angeschlossen ist. Vorteilhaft ist auch der andere Sensor, insbesondere elektrisch, an die Auswerteeinheit angeschlossen. Bevorzugt ist ferner der zusätzliche Sensor, insbesondere elektrisch, an die Auswerteeinheit angeschlossen. Vorzugsweise ist auch der Antrieb der Betätigungseinrichtung, insbesondere elektrisch, an die Auswerteeinheit angeschlossen. Die Auswerteeinheit kann an oder in dem Gehäuse montiert oder separat, insbesondere entfernt, von diesem angeordnet sein.

Mittels der Auswerteeinheit sind bevorzugt von dem Differenzdrucksensor gelieferte Signale auswertbar. Vorteilhaft sind mittels der Auswerteeinheit auch von dem anderen Sensor und/oder von dem zusätzlichen Sensor gelieferte Signale auswertbar. Insbesondere umfasst oder bildet die Auswerteeinheit eine Steuereinheit, sodass die Auswerteeinheit auch als Auswerte- und/oder Steuereinheit bezeichnet werden kann. Vorzugsweise ist mittels der Auswerteeinheit der Antrieb der Betätigungseinrichtung zum Drehen des Absperrkörpers ansteuerbar. Die Auswerteeinheit umfasst bevorzugt einen Rechner, insbesondere einen Digitalrechner.

Gemäß einer Weiterbildung der Erfindung ist mittels der Auswerteeinheit ein Volumenstrom, insbesondere ein Normvolumenstrom des Fluids ermittelbar. Dieser Volumen- oder Normvolumenstrom wird bevorzugt in einem vorgegebenen Zeitintervall erfasst, sodass aus dem Volumen- oder Normvolumenstrom ein Fluid-Volumen oder Fluid-Normvolumen berechenbar ist, welches während des Zeitintervalls die Öffnungen durchströmt hat. Der Volumen- oder Normvolumenstrom ist z.B. auf Basis der von dem Differenzdrucksensor gelieferten Signale ermittelbar. Zusätzlich kann diese Ermittlung auf Basis der von dem anderen Sensor und/oder von dem zusätzlichen Sensor gelieferten Signale erfolgen. Ferner kann der Volumen- oder Normvolumenstrom auf Basis der von dem anderen Sensor gelieferten Signale ermittelt werden, wenn dieser als Durchflusssensor, wie z.B. als thermischer oder kalorimetrischer Durchflusssensor, ausgebildet ist. Somit kann der Volumen- oder Normvolumenstrom durch zwei unterschiedliche Messmethoden ermittelt werden, sodass eine Verifikation des ermittelten Volumen- oder Normvolumenstroms mittels der Auswerteeinheit möglich ist. Vorzugsweise ist es mittels der Auswerteeinheit möglich, einen mittels des thermischen oder kalorimetrischen Durchflusssensors ermittelten Volumen- oder Normvolumenstrom durch einen mittels des Differenzdrucksensors ermittelten Volumen- oder Normvolumenstrom zu verifizieren. Ferner ist es mittels der Auswerteeinheit möglich, einen mittels des Differenzdrucksensors ermittelten Volumen- oder Normvolumenstrom durch einen mittels des thermischen oder kalorimetrischen Durchflussmesssensors ermittelten Volumen- oder Normvolumenstrom zu verifizieren.

Die Erfindung betrifft ferner ein Verfahren zum Steuern einer Druckluftanlage, die einen Motor, einen von dem Motor angetriebenen Druckluftkompressor und eine mit dem Druckluftkompressor verbundene Druckluftversorgungsleitung aufweist, der von dem Druckluftkompressor Druckluft zugeführt wird, wobei
- in einem vorgegeben Zeitintervall eine dem Motor zugeführte Energiemenge ermittelt wird,
- durch Multiplikation der dem Motor zugeführten Energiemenge mit einem Primärenergiefaktor eine in dem vorgegebenen Zeitintervall genutzte Primärenergiemenge ermittelt wird,
- eine in dem vorgegebenen Zeitintervall von dem Kompressor abgegebene Druckluftenergiemenge ermittelt wird,
- ein IST-Druckluftwirkungsrad durch Division der Druckluftenergiemenge durch die Primärenergiemenge ermittelt wird,
- ein Drucklufteffizienzwert durch Division des IST-Druckluftwirkungsrads durch einen vorgegebenen SOLL-Druckluftwirkungsgrad ermittelt wird,
- die Verbindung zwischen dem Druckluftkompressor und der Druckluftversorgungsleitung gesperrt wird, wenn der Drucklufteffizienzwert unter einem vorgegebenen Drucklufteffizienz-Grenzwert liegt. Insbesondere wird in diesem Fall auch der Motor abgeschaltet. Vorzugsweise wird die Drehzahl des Motors in Abhängigkeit vom Drucklufteffizienzwert geregelt oder gesteuert, insbesondere derart, dass dieser erhöht oder maximiert wird.

Durch das erfindungsgemäße Verfahren kann sichergestellt werden, dass die Druckluftanlage nur bei ausreichender Drucklufteffizienz betrieben wird, insbesondere unter Berücksichtigung der eingesetzten Primärenergie. Die Druckluftzufuhr zu der Druckluftversorgungsleitung kann in dem Fall, dass die Verbindung zwischen dem Druckluftkompressor und der Druckluftversorgungsleitung gesperrt wird, z.B. durch wenigstens einen anderen Druckluftkompressor sichergestellt werden.

Bei dem IST-Druckluftwirkungsrad handelt es sich vorzugsweise um einen normierten IST-Druckluftwirkungsrad. Ferner handelt es sich bei dem SOLL-Druckluftwirkungsgrad vorzugsweise um einen normiertem SOLL-Druckluftwirkungsgrad.

Gemäß einer Weiterbildung des Verfahrens umfasst die Druckluftanlage die oder eine erfindungsgemäße Vorrichtung, wobei der Druckluftkompressor unter Zwischenschaltung der erfindungsgemäßen Vorrichtung mit der Druckluftversorgungsleitung verbunden ist. Vorzugsweise wird das Verfahren mit der Auswerteeinheit der erfindungsgemäßen Vorrichtung durchgeführt. Das Verfahren kann aber auch unabhängig von der erfindungsgemäßen Vorrichtung durchgeführt werden und/oder den Gegenstand dieser oder einer separaten Anmeldung bilden.

Der Primärenergiefaktor beschreibt die Primärenergie, die zur Bereitstellung der an den Motor gelieferten Energie (Endenergie), z.B. in Form von brennbarem Gas bei einem Gasmotor oder in Form von elektrischem Strom bei einem Elektromotor, erforderlich war oder ist. Insbesondere ist der Primärenergiefaktor vorgegeben. Da sich die Primärenergie in der Regel aus mehreren Anteilen zusammensetzt, die auf unterschiedliche Weise gewonnen werden, kann sich der Primärenergiefaktor mit der Zeit ändern, wenn zumindest einer der Anteile ab- oder zunimmt, beispielsweise aufgrund eines geringeren Anteils an Erdgas (Primärenergie) und eines dafür höheren Anteils an Biogas (Sekundärenergie), welches aus Biomasse (Primärenergie) gewonnen wird. Ferner kann der Primärenergiefaktor von Land zu Land unterschiedlich sein. Die Primärenergie ergibt sich insbesondere durch Multiplikation der Endenergie mit dem Primärenergiefaktor.

Der Motor ist z.B. ein Gasmotor, dem Energie in Form von brennbarem Gas zugeführt wird. In diesem Fall wird die dem Motor zugeführte Energiemenge insbesondere mit einem Gaszähler ermittelt, der in eine an den Motor angeschlossene Gasversorgungsleitung geschaltet ist.

Der Motor kann aber auch ein Elektromotor sein, dem Energie in Form von elektrischem Strom zugeführt wird. In diesem Fall wird die dem Motor zugeführte Energiemenge insbesondere mit einem Stromzähler ermittelt, der in eine an den Motor angeschlossene Stromversorgungsleitung geschaltet ist.

Die von dem Kompressor abgegebene Druckluftenergiemenge wird insbesondere durch Messen einer, wenigstens einer oder mehrerer physikalischer Eigenschaften der Druckluft ermittelt. Zum Bestimmen der einen, der wenigstens einen oder der mehreren physikalischen Eigenschaften wird insbesondere in oder bei der der Druckluftversorgungsleitung von dem Druckluftkompressor zugeführten Druckluft eine Durchflussmessung durchgeführt, vorzugsweise mit der erfindungsgemäßen Vorrichtung. Bevorzugt werden ferner die Temperatur und/oder der Druck der Druckluft als physikalische Eigenschaften gemessen. Die Durchflussmessung liefert insbesondere einen Normvolumenstrom des Fluids in NormKubikmeter pro Stunde. Durch Multiplikation des Normvolumenstroms mit einer spezifischen Druckluftkennzahl ergibt sich eine Druckluftleistung. Aus der Druckluftleistung wird die in dem vorgegebenen Zeitintervall von dem Kompressor abgegebene Druckluftenergiemenge ermittelt. Dies kann im einfachsten Fall durch Multiplikation der Druckluftleistung mit der Dauer des Zeitintervalls erfolgen. Da sich die Druckluftleitung in dem vorgegebenen Zeitintervall ändern kann, wird die Druckluftenergiemenge aber vorzugsweise durch Integration, insbesondere durch numerische Integration, der Druckluftleistung über das Zeitintervall ermittelt.

Gemäß einer Weiterbildung des Verfahrens weist die Druckluftanlage einen zwischen den Druckluftkompressor und die Druckluftversorgungsleitung geschaltetes Absperrorgan, z.B. in Form eines Absperrhahn, auf, mittels welchem die Verbindung zwischen dem Druckluftkompressor und der Druckluftversorgungsleitung gesperrt wird, wenn der Drucklufteffizienzwert unter dem vorgegebenen Drucklufteffizienz-Grenzwert liegt. Vorzugsweise ist das Absperrorgan durch die erfindungsgemäße Vorrichtung gebildet, wobei insbesondere eine der koaxialen Öffnungen an den Druckluftkompressor und die andere der koaxialen Öffnungen an die Druckluftversorgungsleitung angeschlossen ist. Vorzugsweise ist dabei die Verbindung des zweiten Messeingangs mit dem Innenraum zwischen dem Druckluftkompressor und dem Absperrkörper und/oder der Messdüse vorgesehen. Wenn der Drucklufteffizienzwert unter dem vorgegebenen Drucklufteffizienz-Grenzwert liegt, wird bevorzugt der Absperrkörper der erfindungsgemäßen Vorrichtung in die zweite Drehwinkelstellung überführt. Hierdurch wird die Verbindung zwischen dem Druckluftkompressor und der Druckluftversorgungsleitung gesperrt.

Gemäß einer Weiterbildung des Verfahrens weist die Druckluftanlage einen mit dem Motor thermisch gekoppelten Heizkreislauf auf, dem Abwärme des Motors zugeführt wird, wobei
- eine in dem vorgegebenen Zeitintervall von dem Heizkreislauf abgegebene Wärmemenge ermittelt wird,
- ein IST-Wärmewirkungsrad durch Division der Wärmemenge durch die Primärenergiemenge ermittelt wird,
- ein Wärmeeffizienzwert durch Division des IST-Wärmewirkungsrads durch einen vorgegebenen SOLL-Wärmewirkungsgrad ermittelt wird,
- die Verbindung zwischen dem Druckluftkompressor und der Druckluftversorgungsleitung gesperrt wird, wenn der Wärmeeffizienzwert unter einem vorgegebenen Wärmeeffizienz-Grenzwert liegt. Insbesondere wird in diesem Fall auch der Motor abgeschaltet. Vorzugsweise wird die Drehzahl des Motors in Abhängigkeit vom Wärmeeffizienzwert geregelt oder gesteuert, insbesondere derart, dass dieser erhöht oder maximiert wird.

Durch diese Weiterbildung wird sichergestellt, dass die Druckluftanlage nur bei ausreichender Wärmeeffizienz betrieben wird, insbesondere unter Berücksichtigung der eingesetzten Primärenergie. Die Wärmezufuhr zu dem Heizkreislauf kann in dem Fall, dass die Verbindung zwischen dem Druckluftkompressor und der Druckluftversorgungsleitung gesperrt wird, z.B. durch wenigstens eine andere Heizungsanlage sichergestellt werden.

Vorzugsweise ist auch der Druckluftkompressor thermisch mit dem Heizkreislauf gekoppelt, dem zusätzlich Abwärme des Druckluftkompressors zugeführt wird. Ist der Motor ein Gasmotor, ist vorzugsweise auch die Abgasleitung des Gasmotors thermisch mit dem Heizkreislauf gekoppelt.

Bei dem IST-Wärmewirkungsrad handelt es sich vorzugsweise um einen normierten IST-Wärmewirkungsrad. Ferner handelt es sich bei dem SOLL-Wärmewirkungsgrad vorzugsweise um einen normiertem SOLL-Wärmewirkungsgrad.

Die Verbindung zwischen dem Druckluftkompressor und der Druckluftversorgungsleitung wird z.B. mittels des Absperrorgans gesperrt, wenn der Wärmeeffizienzwert unter dem vorgegebenen Wärmeeffizienz-Grenzwert liegt. Bevorzugt wird der Absperrkörper der erfindungsgemäßen Vorrichtung in die zweite Drehwinkelstellung überführt, wenn der Wärmeeffizienzwert unter dem vorgegebenen Wärmeeffizienz-Grenzwert liegt. Hierdurch wird die Verbindung zwischen dem Druckluftkompressor und der Druckluftversorgungsleitung gesperrt.

Die von dem Heizkreislauf abgegebene Wärmemenge wird insbesondere durch Temperaturmessungen in oder an einem Wärmeübertragungsfluid gemessen, welches in dem Heizkreislauf zirkuliert. Vorteilhaft ist wenigstens ein Wärmeverbraucher in den Heizkreislauf geschaltet oder thermisch mit diesem gekoppelt. Beispielsweise kann durch Messen der Temperaturen des Wärmeübertragungsfluids vor und hinter dem wenigstens einen Wärmeverbraucher ein Wert für die abgegebene Wärmemenge ermittelt werden.

Gemäß einer Weiterbildung der Erfindung wird die im Vergleich zu einer herkömmlichen Druckluftanlage eingesparte Primärenergiemenge während einer vorgegeben Zeitdauer ermittelt. Die eingesparte Primärenergiemenge wird mit einem Kohlendioxid-Emissionsfaktor multipliziert, woraus sich eine gegenüber der herkömmlichen Druckluftanlage eingesparte Kohlendioxidmenge ergibt. Die vorgegebenen Zeitdauer kann mit dem vorgegeben Zeitintervall identisch sein oder von diesem abweichen.

Die eingesparte Primärenergiemenge wird vorzugsweise dadurch ermittelt, dass die Differenz aus dem, insbesondere normierten, IST-Druckluftwirkungsgrad und einem Referenzwirkungsgrad gebildet wird. Diese Differenz wird mit der während der vorgegebenen Zeitdauer eingesetzten Primärenergiemenge multipliziert, woraus sich die eingesparte Primärenergiemenge ergibt. Die während der vorgegebenen Zeitdauer eingesetzte Primärenergiemenge wird insbesondere dadurch bestimmt, dass die dem Motor zugeführte Energiemenge während der Zeitdauer ermittelt und mit dem Primärenergiefaktor multipliziert wird.

Bevorzugt wird der, insbesondere normierte, Druckluftwirkungsgrad der herkömmlichen Druckluftanlage als Referenzwirkungsgrad ermittelt, vorzugsweise vor der Ermittlung der eingesparten Primärenergiemenge und/oder der eingesparten Kohlendioxidmenge. Es ist aber auch möglich, dass der Referenzwirkungsgrad durch den, insbesondere normierten, SOLL-Druckluftwirkungsgrad gebildet wird.

Gemäß einer Weiterbildung des Verfahrens wird ein die Leckage der Druckluftanlage charakterisierender Wert (Leckagewert) während der Dauer eines Grundlastzustands der Druckluftanlage ermittelt. Dafür werden während dieser Dauer Durchflussmessungen durchgeführt, und durch Auswertung dieser Durchflussmessungen wird der Leckagewert bestimmt.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht einer Vorrichtung gemäß einer Ausführungsform der Erfindung,
- Fig. 2: einen Längsschnitt durch die Vorrichtung entlang der aus Fig. 1 ersichtlichen Schnittlinie A-A in perspektivischer Darstellung,
- Fig. 3: eine Seitenansicht des aus Fig. 1 ersichtlichen Absperrhahns der Vorrichtung, wobei mehrere Anbauteile weggelassen wurden,
- Fig. 4: einen Schnitt durch den Absperrhahn entlang der aus Fig. 3 ersichtlichen Schnittlinie B-B,
- Fig. 5: einen Längsschnitt durch den Absperrkörper des Absperrhahns,
- Fig. 6: einen Längsschnitt durch einen Sicherungsring des Absperrhahns,
- Fig. 7: eine Ansicht des aus Fig. 2 ersichtlichen Strömungsgleichrichters,
- Fig. 8: eine Ansicht des Strömungsgleichrichters im abgewickelten Zustand und
- Fig. 9: eine schematische Ansicht einer Druckluftanlage mit einer Vorrichtung nach Fig. 1.

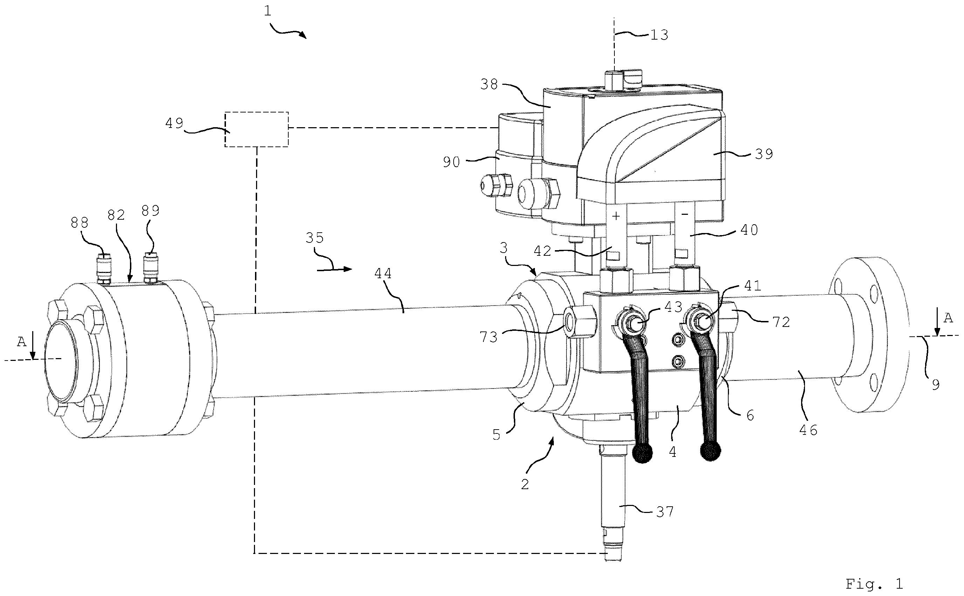

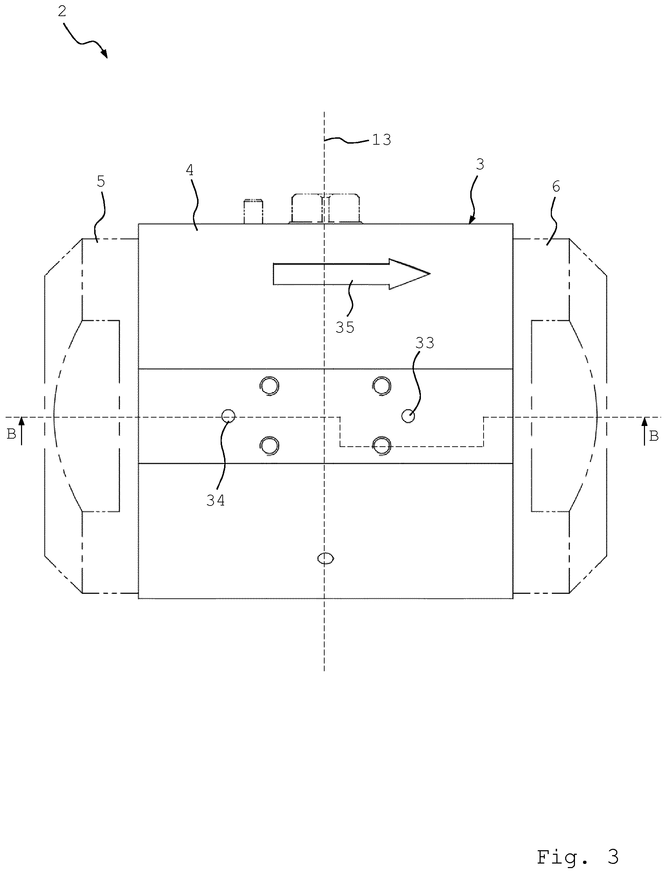

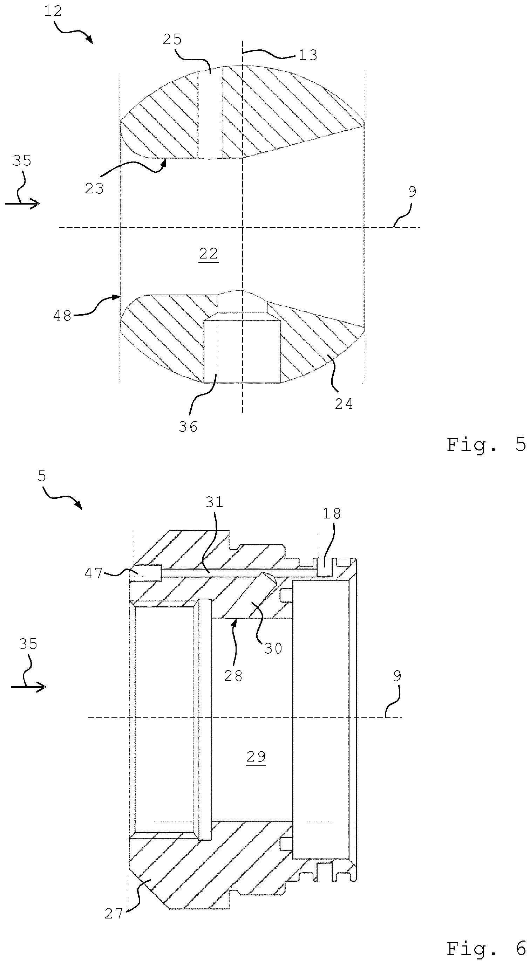

Aus den Figuren 1 bis 6 sind unterschiedliche Ansichten und Teilansichten einer Vorrichtung 1 gemäß einer Ausführungsform der Erfindung ersichtlich. Die Vorrichtung 1 umfasst einen Absperrhahn 2 mit einem Gehäuse 3, welches einen ersten Gehäuseteil 4, einen zweiten Gehäuseteil 5 und einen dritten Gehäuseteil 6 aufweist, wobei der zweite und der dritte Gehäuseteil 5 und 6 jeweils als Sicherungsring ausgebildet und in den ersten Gehäuseteil 4 eingeschraubt sind. Das Gehäuse 3 ist mit zwei koaxialen Öffnungen 7 und 8 versehen, wobei der Sicherungsring 5 die Gehäuseöffnung 7 und der Sicherungsring 6 die Gehäuseöffnung 8 umfasst. Eine axiale Richtung des Gehäuses 3 ist mit dem Bezugszeichen 9 gekennzeichnet, welche auch gleichzeitig die Achse der Öffnungen 7 und 8 bildet. Die Sicherungsringe 5 und 6 sind in axialer Richtung 9 auf unterschiedlichen Seiten in den ersten Gehäuseteil 4 eingeschraubt. In dem ersten Gehäuseteil 4 sind zwei Gleitringe 10 und 11 im axialen Abstand zueinander angeordnet, zwischen denen eine in dem ersten Gehäuseteil 4 angeordnete Absperrkugel 12 sitzt, die um eine senkrecht zur axialen Richtung 9 verlaufenden Drehachse 13 drehbar an den Gleitringen 10 und 11 gelagert ist. Die Sicherungsringe 5 und 6 sichern dabei die Gleitringe 10 und 11 und somit auch die Absperrkugel 12 in dem ersten Gehäuseteil 4.

Zwischen dem Gleitring 10 und dem Sicherungsring 5 sowie zwischen dem Gleitring 11 und dem Sicherungsring 6 ist jeweils ein Dichtungsring 14 bzw. 15 angeordnet. Zwischen dem Sicherungsring 5 und dem ersten Gehäuseteil 4 sind zwei Dichtungsringe 16 und 17 angeordnet, wobei in axialer Richtung 9 zwischen den Dichtungsringen 16 und 17 ein Ringraum 18 vorgesehen ist, der zwischen dem Sicherungsring 5 und dem ersten Gehäuseteil 4 eingeschlossen ist. Der Ringraum 18 ist als Ringnut in die Außenumfangsfläche des Sicherungsrings 5 eingebracht. Zwischen dem Sicherungsring 6 und dem ersten Gehäuseteil 4 ist ein Dichtungsring 19 angeordnet.

In die Absperrkugel 12 ist eine Eingriffsausnehmung 20 eingebracht, in welche ein Betätigungselement 21 eingreift, mittels welchem die Absperrkugel 12 um die Drehachse 13 drehbar ist. Das Betätigungselement 21 erstreckt sich dabei durch eine in der Wandung 32 des ersten Gehäuseteils 4 vorgesehene Betätigungsausnehmung 85 hindurch und ist gegenüber dem ersten Gehäuseteil 4 durch einen Dichtungsring 86 abgedichtet. Ferner ist das Betätigungselement 21 bezüglich der Drehachse 13 drehstarr mit der Absperrkugel 12 verbunden.

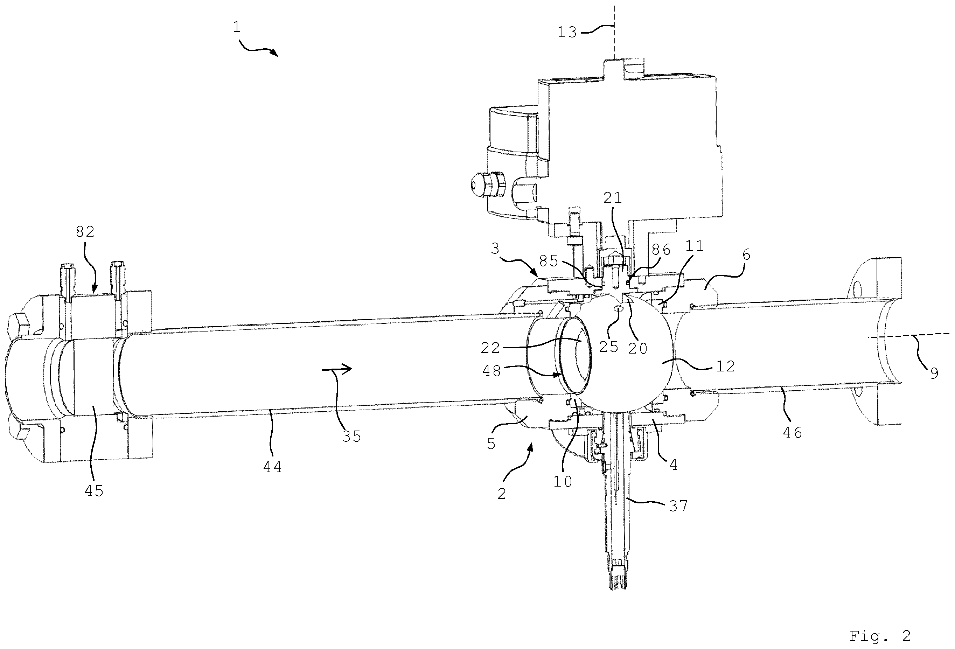

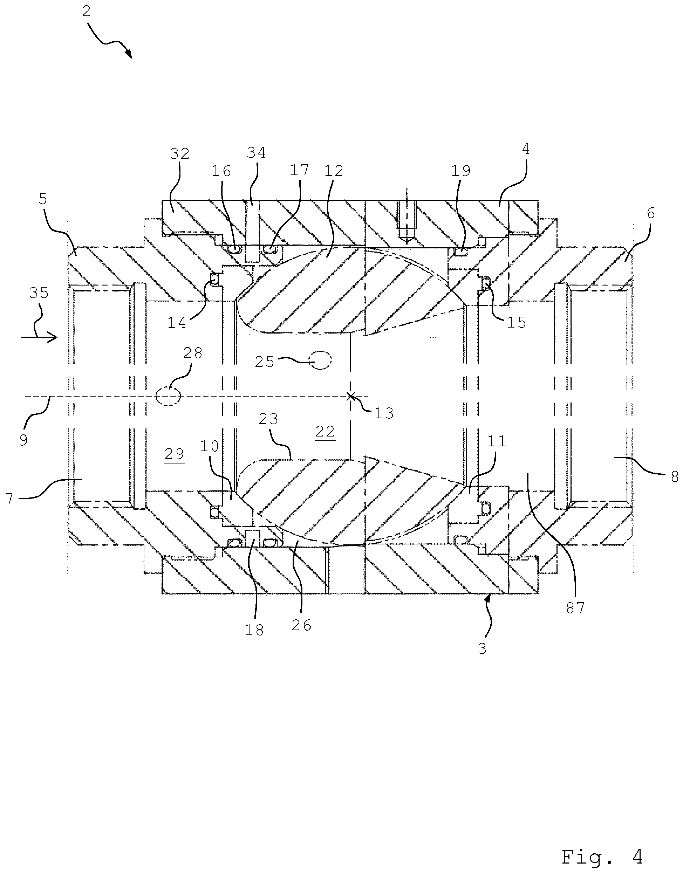

Durch das Gehäuse 3 verläuft in axialer Richtung 9 ein die Öffnungen 7 und 8 sowie den Innenraum 29 umfassender Strömungskanal 87 hindurch, in dem die Absperrkugel 12 angeordnet ist. Ferner erstreckt sich quer zur Drehachse 13 durch die Absperrkugel 12 ein Durchflusskanal 22 hindurch, der mit einer lokalen Querschnittsverengung 23 versehen ist. In der aus den Fig. 2 und 4 ersichtlichen öffnenden Stellung (erste Drehwinkelstellung) der Absperrkugel 12 ist der Durchflusskanal 22 in den Strömungskanal 87 geschaltet und dadurch an die beiden Öffnungen 7 und 8 angeschlossen. Der Durchflusskanal 22 verläuft dabei in axialer Richtung 9 und bildet einen Teil des Strömungskanals 87, sodass ein Fluid zwischen den Öffnungen 7 und 8 durch den Strömungskanal 87 strömen kann. In der ersten Drehwinkelstellung ist der Absperrhahn 2 somit geöffnet. Wird die Absperrkugel 12 und somit auch der Durchflusskanal 22 mittels des Betätigungselements 21 um 90° um die Drehachse 13 in eine sperrende Stellung (zweite Drehwinkelstellung) gedreht, sperrt die Absperrkugel 12 mit ihrer Wandung 24 den Strömungskanal 87, sodass ein Durchfluss des Fluids durch den Strömungskanal 87 zwischen den beiden Öffnungen 7 und 8 verhindert ist. Der Durchflusskanal 22 verläuft nun quer zur axialen Richtung 9. In der zweiten Drehwinkelstellung ist der Absperrhahn 2 somit geschlossen oder gesperrt.

In der Wandung 24 der Absperrkugel 12 ist im Bereich der Querschnittsverengung 23 ein Druckentnahmeloch 25 vorgesehen, durch welches hindurch ein zwischen der Absperrkugel 12 und dem ersten Gehäuseteil 4 vorgesehener Freiraum 26 in der öffnenden Stellung der Absperrkugel 12 mit dem Durchflusskanal 22 verbunden ist. Der Freiraum 26 ist umlaufend ausgebildet und in axialer Richtung durch die Sicherungsringe 5 und 6 sowie durch die Gleitringe 10 und 11 begrenzt. Ferner ist in der Wandung 27 des Sicherungsrings 5 ein Druckentnahmeloch 28 vorgesehen, welches einen Innenraum 29 des Sicherungsrings 5 mit dem Ringraum 18 verbindet. Aus Fertigungsgründen ist das Druckentnahmeloch 28 durch zwei Bohrungen 30 und 31 gebildet, die ineinander übergehen. Die Bohrung 30 erstreckt sich dabei vom Innenraum 29 bis zur Bohrung 31 und verläuft insbesondere schräg zur axialen Richtung 9. Die Bohrung 31 verbindet die Bohrung 30 mit dem Ringraum 18 und verläuft insbesondere in axialer Richtung 9. Aus Fertigungsgründen ist die Bohrung 31 durch eine Stirnseite des Sicherungsrings 5 in die Wandung 27 eingebracht und anschließend an dieser Stirnseite durch einen Verschluss 47 dicht verschlossen.

In der Wandung 32 des ersten Gehäuseteils 4 sind zwei Messöffnungen 33 und 34 vorgesehen, wobei die Messöffnung 33 in den Freiraum 26 einmündet und die Messöffnung 34 in den Ringraum 18 einmündet. Durch die Messöffnung 33 hindurch ist somit der Durchflusskanal 22 zugänglich, wohingegen durch die Messöffnung 34 der Innenraum 29 zugänglich ist. Da die Absperrkugel 12 eine Drossel oder Düse 48 mit Querschnittsverengung, insbesondere eine Venturi-Düse, bildet, ist bezüglich des strömenden Fluids eine Durchflussmessung durchführbar, indem an die Messöffnungen 33 und 34 ein Differenzdrucksensor 39 angeschlossen wird. Die Strömungsrichtung des Fluids, dessen Durchfluss zu messen ist, ist dabei mit dem Pfeil 35 gekennzeichnet. Bei dem Fluid handelt es sich insbesondere um Druckluft.

In der Wandung 24 der Absperrkugel ist ferner ein Sensoraufnahmeloch 36 vorgesehen, durch welches hindurch sich ein kalorimetrischer Durchflussmesssensor 37 in den Durchflusskanal 22 hineinerstreckt. Das Sensoraufnahmeloch 36 erstreckt sich entlang der Drehachse 13, sodass der Durchflusssensor 37 nicht entfernt werden muss, wenn die Absperrkugel 12 gedreht wird. Dabei ist das Sensoraufnahmeloch 36 dem Betätigungselement 21 diametral gegenüberliegend angeordnet, sodass eine Betätigung der Absperrkugel 12 nicht durch den Durchflusssensor 37 behindert wird.

An dem ersten Gehäuseteil 4 sind außen ein an das Betätigungselement 21 angeschlossener elektrischer Antrieb 38 und der Differenzdrucksensor 39 befestigt, der mit einem ersten Messeingang 40 unter Zwischenschaltung eines Absperrhahns 41 mit der Messöffnung 33 und mit einem zweiten Messeingang 42 unter Zwischenschaltung eines Absperrhahns 43 mit der Messöffnung 34 verbunden ist. Dabei wird der erste Messeingang 40 insbesondere als Plus-Anschluss und der zweite Messeingang 42 insbesondere als Minus-Anschluss des Differenzdrucksensors 39 bezeichnet, was in Fig. 1 durch die entsprechenden Symbole für Plus und Minus angedeutet ist. Der Differenzdrucksensor 39 ist elektrisch an eine Auswerte- und/oder Steuereinheit 49 angeschlossen, mit der auch der Durchflusssensor 37 und der Antrieb 38 elektrisch verbunden sind. Durch den Antrieb 38 ist es möglich, die Absperrkugel 12 automatisch und die Drehachse 13 zu drehen. Die Auswerte- und/oder Steuereinheit 49 kann in Entfernung zum Absperrhahn 2 und/oder zum Gehäuse 3 vorgesehen sein. Alternativ kann die Auswerte- und/oder Steuereinheit 49 aber auch in oder an dem Gehäuse 3 vorgesehen, beispielsweise in einem an dem Gehäuse 3 montierten Anbaugehäuse 90 angeordnet sein.

Die Absperrhähne 41 und 43 können unterschiedliche Schaltstellungen annehmen, wobei in einer geöffneten Schaltstellung des Absperrhahns 41 der erste Messeingang 40 an die Messöffnung 33 angeschlossen und in einer gesperrten Schaltstellung des Absperrhahns 41 der erste Messeingang 40 von der Messöffnung 33 getrennt ist. Ferner ist in einer geöffneten Schaltstellung des Absperrhahns 43 der zweite Messeingang 42 an die Messöffnung 34 angeschlossen, und in einer gesperrten Schaltstellung des Absperrhahns 43 ist der zweite Messeingang 42 von der Messöffnung 34 getrennt.

In einer Prüf-Schaltstellung des Absperrhahns 41 ist der erste Messeingang 40 an einen von außen zugänglichen Prüfanschluss 72 angeschlossen und von der Messöffnung 33 getrennt. Ferner ist in einer Prüf-Schaltstellung des Absperrhahns 43 der zweite Messeingang 42 an einen von außen zugänglichen Prüfanschluss 73 angeschlossen und von der Messöffnung 34 getrennt. Der Differenzdrucksensor 39 kann somit über die Prüfanschlüsse 72 und 73 mit einem definierten Prüfdruck oder mit einer definierten Prüfdruckdifferenz beaufschlagt werden, um die Funktionsfähigkeit des Differenzdrucksensors 39 zu überprüfen.

Bevorzugt ist es zusätzlich möglich, in einer Druckausgleichstellung der beiden Absperrhähne 41 und 43 die Messeingänge 40 und 42 von den Messöffnungen 33 und 34 zu trennen und miteinander zu verbinden. Somit ist ein Druckausgleich zwischen den beiden Messeingängen 40 und 42 möglich.

An den Sicherungsring 5 ist unter Zwischenschaltung einer als Einlaufstrecke dienenden Fluidleitung 44 ein Strömungsgleichrichter 45 angeschlossen, sodass die Einlaufstrecke und damit die Fluidleitung 44 relativ kurz ausbildbar ist. Insbesondere glättet der Strömungsgleichrichter 45 die Strömung des Fluids. Ferner ist an dem Sicherungsring 6 eine Fluidleitung 46 angeschlossen, die als Auslaufstrecke oder als Anschluss für eine als Auslaufstrecke dienende Fluidleitung dient. Der Strömungsgleichrichter 45 ist in einem Gehäuse 82 angeordnet, welches aus Fig. 1 ersichtlich ist. An dem Gehäuse 82 sind zwei Prüfanschlüsse 88 und 89 vorgesehen, an welche ein Differenzdrucksensor anschließbar ist, mittels welchem die Differenz aus den Drücken des strömenden Fluids vor und hinter dem Strömungsgleichrichter 45 messbar ist. Somit ist eine Verschmutzung des Strömungsgleichrichters 45 erfassbar.

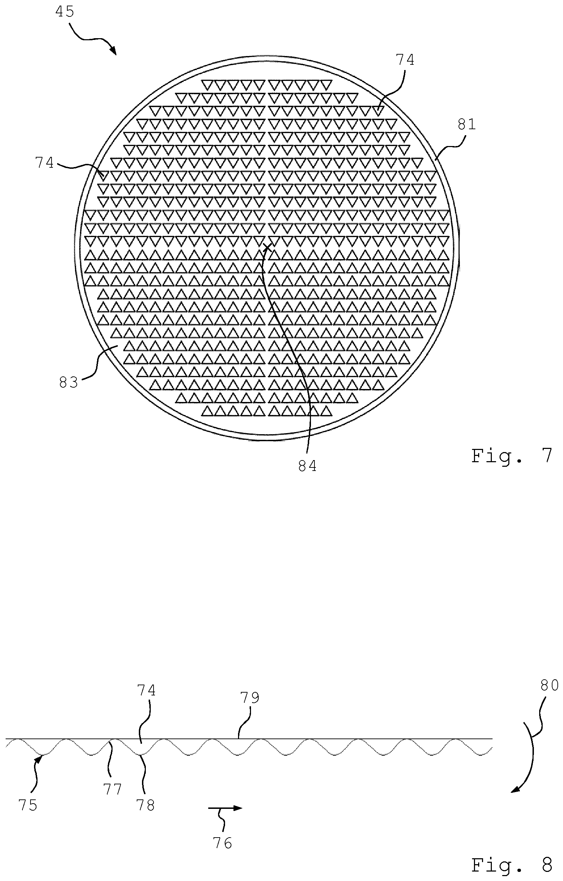

Aus Fig. 7 ist eine schematische Draufsicht auf den Strömungsgleichrichter 45 in axialer Richtung 9 ersichtlich, der mehrere durchgehende Strömungspfade 74 umfasst, die sich in axialer Richtung 9 erstrecken. Der Strömungsgleichrichter 45 besteht aus einem metallischen Band 75, welches in Richtung seiner Längserstreckung 76 wellenförmig ausgebildet und zu einer Spirale 83 aufgewickelt ist. Durch die Wellenform ist das Band 75 abwechselnd mit Erhebungen 77 und Vertiefungen 78 versehen, welche die parallel zur Mittelachse 84 der Spirale 83 verlaufenden, durchgehenden Strömungspfade 74 bilden. Die Mittelachse 84 der Spirale 83 verläuft dabei in axialer Richtung 9. Zwischen den Wicklungen des Bands 75 ist ein metallisches Zwischenband 79 vorgesehen, welches zusammen mit dem Band 75 zu der Spirale 83 aufgewickelt ist.

Die Strömungspfade 74 verlaufen somit zwischen dem wellenförmigen Band 75 und dem Zwischenband 79. Das Zwischenband 79 weist keinen wellenförmigen Verlauf auf und ist insbesondere flach ausgebildet.

Ein Teil einer Abwicklung der Spirale 83 ist schematischer Darstellung in Fig. 8 gezeigt, wobei zur Herstellung des Strömungsgleichrichters 45 das Band 75 und das Zwischenband 79 übereinander gelegt und zusammen zu der Spirale 83 aufgewickelt werden, was in Fig. 8 durch den Pfeil 80 angedeutet ist. Die Wicklungen des Zwischenbands 79 liegen nach dem Aufwickeln zwischen den Wicklungen des wellenförmigen Bands 75. Die Spirale 83 wird vorzugsweise von einem Haltering 81 zusammengehalten.

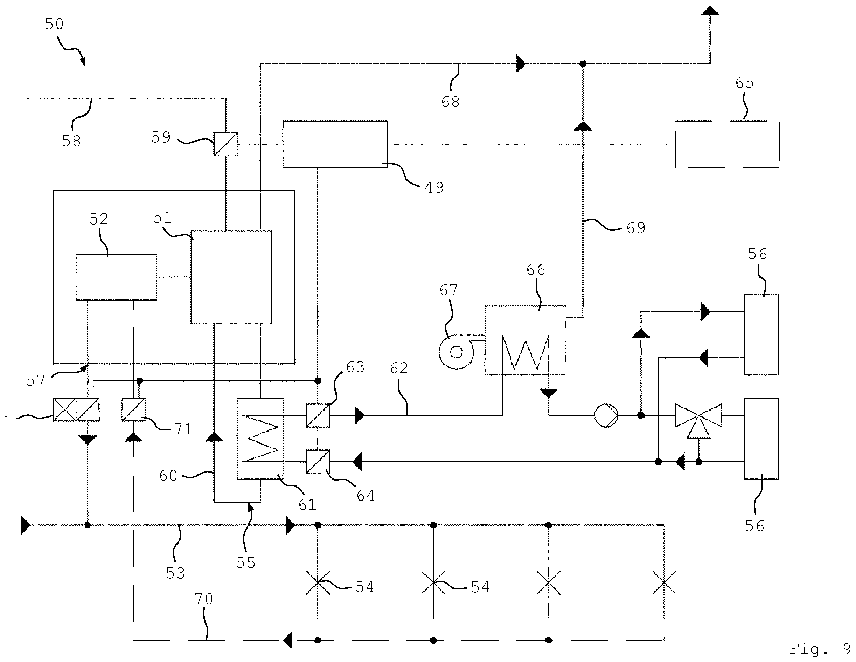

Aus Fig. 9 ist eine schematische Ansicht einer Druckluftanlage 50 ersichtlich, die einen Gasmotor 51, einen von diesem, insbesondere direkt oder unter Zwischenschaltung eines Getriebes, angetriebenen Druckluftkompressor 52, eine Druckluftversorgungsleitung 53 mit Druckluftverbrauchern 54 und eine Heizkreislaufanordnung 55 mit Wärmeverbrauchern 56 aufweist, wobei die Druckluftversorgungsleitung 53 unter Zwischenschaltung der erfindungsgemäßen Vorrichtung 1 mit dem Druckluftausgang 57 des Druckluftkompressors 52 verbunden ist. Dabei ist die Vorrichtung 1 mit dem Strömungsgleichrichter 45 an den Druckluftausgang 57 und mit der Fluidleitung 46 an die Druckluftversorgungsleitung 53 angeschlossen. Der Gasmotor 51 wird über eine Gasleitung 58 mit brennbarem Gas versorgt, in die ein mit der Auswerte- und Steuereinheit 49 elektrisch verbundener Gaszähler 59 geschaltet ist, mittels welchem die dem Gasmotor 51 zugeführte Gasmenge (beispielsweise Gasvolumen) ermittelbar ist. Die Auswerte- und Steuereinheit 49 kann dabei örtlich getrennt von dem Absperrhahn 2 der Vorrichtung 1 vorgesehen sein. Die Abgasleitung des Gasmotors 51 ist mit dem Bezugszeichen 68 gekennzeichnet.

Die Heizkreislaufanordnung 55 umfasst einen mit dem Gasmotor 51 und vorzugsweise auch mit der Abgasleitung 68 und/oder mit dem Kompressor 52 thermisch gekoppelten ersten Heizkreislauf 60, in den ein Wärmetauscher 61 geschaltet ist, wobei in dem ersten Heizkreislauf 60 ein erstes Wärmeübertragungsfluid zirkuliert. Über den Wärmetauscher 61 ist der erste Heizkreislauf 60 thermisch mit einem zweiten Heizkreislauf 62 gekoppelt, in den die Wärmeverbraucher 56 geschaltet sind, wobei in dem zweiten Heizkreislauf 62 ein zweites Wärmeübertragungsfluid zirkuliert. Das erste Wärmeübertragungsfluid wird durch die Abwärme des Gasmotors 51 erwärmt und gibt über den Wärmetauscher 61 Wärme an das zweite Wärmeübertragungsfluid ab, mittels welchem den Wärmeverbrauchern 56 Wärme zuführbar ist. Ferner sind zwei mit der Auswerte- und Steuereinheit 49 elektrisch verbundene Temperatursensoren 63 und 64 vorgesehen, mittels welchen die Temperaturen des zweiten Wärmeübertragungsfluids beim Ausströmen aus und beim Einströmen in den Wärmetauscher 61 messbar sind.

Die Auswerte- und Steuereinheit 49 ermittelt auf Basis der von dem Gaszähler 59 gelieferten Signale und der von dem Differenzdrucksensor 39 und/oder von dem kalorimetrischen Durchflusssensor gelieferten Signale in einem vorgegebenen Zeitintervall den Istwert des Wirkungsgrads der Druckluftanlage (IST-Druckluftwirkungsgrad) als Mittelwert. Durch Division des IST-Druckluftwirkungsgrads durch einen Primärenergiefaktor wird mittels der Auswerte- und Steuereinheit 49 bevorzugt ein normierter IST-Druckluftwirkungsgrad gebildet. Der Primärenergiefaktor ist insbesondere für eine Form der dem Motor 52 zugeführten Endenergie, hier Gas, und für ein Land oder eine Region vorgegeben. Mit der Zeit kann sich der Primärenergiefaktor ändern.

Mittels der Auswerte- und Steuereinheit 49 wird der, insbesondere normierte, IST-Druckluftwirkungsgrad durch einen vorgegebenen, insbesondere normierten, SOLL-Druckluftwirkungsgrad dividiert, wodurch sich eine Drucklufteffizienz ergibt.

Liegt der Wert der Drucklufteffizienz unter einem ersten Drucklufteffizienz-Grenzwert aber über einem zweiten Drucklufteffizienz-Grenzwert, so wird mittels der Auswerte- und Steuereinheit 49 ein erstes Warnsignal abgegeben, welches z.B. ein optisches Warnsignal in gelber Farbe ist.

Liegt der Wert der Drucklufteffizienz hingegen unter beiden Drucklufteffizienz-Grenzwerten, so wird mittels der Auswerte- und Steuereinheit 49 ein zweites Warnsignal abgegeben, welches z.B. ein optisches Warnsignal in roter Farbe ist. Ferner wird mittels der Auswerte- und Steuereinheit 49 der Antrieb 38 derart angesteuert, dass die Absperrkugel 12 den Durchfluss durch die Öffnungen 7 und 8 sperrt. Dadurch wird die Druckluftversorgungsleitung 53 vom Druckluftkompressor 52 getrennt. Zusätzlich wird mittels der Auswerte- und Steuereinheit 49 an eine übergeordnete Steuerung 65 ein Bereitschaftssignal abgegeben, welches den nicht betriebsbereiten Zustand der Druckluftanlage 1 signalisiert. Insbesondere wird auch der Gasmotor 51 abgeschaltet, was z.B. mittels der Auswerte- und Steuereinheit 49 oder mittels der übergeordneten Steuerung 65 erfolgen kann.

Ferner wird mittels der Auswerte- und Steuereinheit 49 auf Basis der von den Temperatursensoren 63 und 64 gelieferten Signale die in einem vorgegebenen Zeitintervall tatsächlich, insbesondere von den Wärmeverbrauchern 56, genutzte Abwärme der Druckluftanlage ermittelt und durch die in diesem Zeitintervall eingesetzte Primärenergiemenge dividiert. Das Ergebnis wird dann über ein vorgegebenes Zeitintervall gemittelt. Daraus ergibt sich der, insbesondere normierte, IST-Wärmewirkungsgrad, der mittels der Auswerte- und Steuereinheit 49 durch einen vorgegebenen, insbesondere normierten, SOLL-Wärmewirkungsgrad dividiert wird. Das Ergebnis wird mittels der Auswerte- und Steuereinheit 49 über einen vorgegebenen Zeitraum gemittelt, woraus sich die, insbesondere normierte, Wärmeeffizienz ergibt. Die oben genannte Primärenergiemenge lässt sich z.B. durch Multiplikation des Primärenergiefaktors mit der dem Gasmotor 51 in dem zugehörigen Zeitintervall zugeführten Energiemenge (in Form von Gas) bestimmen, die mittels des Gaszählers 59 erfassbar ist.

Liegt der Wert der Wärmeeffizienz unter einem ersten Wärmeeffizienz-Grenzwert aber über einem zweiten Wärmeeffizienz-Grenzwert, so wird mittels der Auswerte- und Steuereinheit 49 das erste Warnsignal abgegeben.

Liegt der Wert der Wärmeeffizienz hingegen unter beiden Wärmeeffizienz-Grenzwerten, so wird mittels der Auswerte- und Steuereinheit 49 das zweite Warnsignal abgegeben. Ferner wird mittels der Auswerte- und Steuereinheit 49 der Antrieb 38 derart angesteuert, dass die Absperrkugel 12 den Durchfluss durch die Öffnungen 7 und 8 sperrt. Dadurch wird die Druckluftversorgungsleitung 53 vom Druckluftkompressor 52 getrennt. Zusätzlich wird mittels der Auswerte- und Steuereinheit 49 an die übergeordnete Steuerung 65 das den nicht betriebsbereiten Zustand der Druckluftanlage 1 signalisierende Bereitschaftssignal abgegeben. Insbesondere wird auch der Gasmotor 51 abgeschaltet, was z.B. mittels der Auswerte- und Steuereinheit 49 oder mittels der übergeordneten Steuerung 65 erfolgen kann.

Ergänzend kann in den zweiten Heizkreislauf 62 ein Wärmetauscher 66 geschaltet sein, der mit einem Brenner 67 gekoppelt ist, der insbesondere ein Gasbrenner ist. Bei großem Wärmebedarf kann somit der Brenner 67 eingeschaltet und das zweite Wärmeübertragungsfluid zusätzlich erwärmt werden. Die Abgasleitung des Brenners 67 ist mit dem Bezugszeichen 69 gekennzeichnet und kann thermisch mit dem ersten oder dem zweiten Heizkreislauf gekoppelt sein.

Ferner kann ergänzend eine Druckluftrückführung 70 vorgesehen sein, mittels welcher von den Druckluftverbrauchern 54 abgegebene Druckluft wieder dem Druckluftkompressor 52 zuführbar ist. In die Druckluftrückführung 70 ist ein Durchflusssensor 71 geschaltet, der mit der Auswerte- und Steuereinheit 49 verbunden ist. Durch die Druckluftrückführung 70 kann die Drucklufteffizienz gesteigert werden.

Zusätzlich ist es mittels der Auswerte- und Steuereinheit 49 möglich, die nach Umrüstung einer herkömmlichen Druckluftanlage in eine Druckluftanlage 1 nach Fig. 9 eingesparte Kohlendioxid-Emission (CO2-Emission) zu ermitteln. Dafür wird vor der Umrüstung der Wirkungsgrad der herkömmlichen Druckluftanlage als Referenzwirkungsgrad, insbesondere als normierter Referenzwirkungsgrad, bestimmt. Nach Umrüstung der Druckluftanlage wird mittels der Auswerte- und Steuereinheit 49 in einem vorgegebenen Zeitintervall die Differenz aus dem, insbesondere normierten, IST-Druckluftwirkungsgrad und dem, insbesondere normierten, Referenzwirkungsgrad ermittelt und diese Differenz mit der in diesem Zeitintervall dem Motor zugeführten Primärenergiemenge multipliziert. Das Ergebnis liefert die in dem Zeitintervall eingesparte Primärenergiemenge. Die eingesparte Primärenergie kann nun mittels der Auswerte- und Steuereinheit 49 mit einem vorgegebenen CO2-Emissionsfaktor multipliziert werden, woraus sich die eingesparte CO2-Emission in dem vorgegebenen Zeitintervall ergibt.

Ergänzend ist es mittels der Auswerte- und Steuereinheit 49 möglich, einen die Leckage der Druckluftanlage 1 charakterisierenden Wert (Leckagewert) zu ermitteln. Liegt für die Dauer eines vorgegebenen Zeitintervalls ein Grundlastzustand der Druckluftanlage vor, lässt sich durch Auswertung von während dieser Dauer durchgeführten Durchflussmessungen der Leckagewert mittels der Auswerte- und Steuereinheit 49 bestimmen.

Gemäß einer Abwandlung des Druckluftkreislaufes 50 wird der Gasmotor 51 durch einen Elektromotor und der Gaszähler 59 durch einen Stromzähler ersetzt.

### Bezugszeichenliste

1 Vorrichtung zur Differenzdruckmessung
2 Absperrhahn
3 Gehäuse
4 erster Gehäuseteil
5 zweiter Gehäuseteil / Sicherungsring
6 dritter Gehäuseteil / Sicherungsring
7 Gehäuseöffnung
8 Gehäuseöffnung
9 axiale Richtung
10 Gleitring
11 Gleitring
12 Absperrkugel
13 Drehachse
14 Dichtungsring
15 Dichtungsring
16 Dichtungsring
17 Dichtungsring
18 Ringraum
19 Dichtungsring
20 Eingriffsausnehmung in Absperrkugel
21 Betätigungselement
22 Durchflusskanal
23 Querschnittsverengung des Durchflusskanals
24 Wandung der Absperrkugel
25 Druckentnahmeloch in Absperrkugel
26 Freiraum
27 Wandung des zweiten Gehäuseteils
28 Druckentnahmeloch im zweiten Gehäuseteil
29 Innenraum
30 Bohrung
31 Bohrung
32 Wandung des ersten Gehäuseteils
33 Messöffnung
34 Messöffnung
35 Strömungsrichtung des Fluids
36 Sensoraufnahmeloch in Absperrkugel
37 kalorimetrischer Durchflusssensor
38 Antrieb
39 Differenzdrucksensor
40 erster Messeingang
41 Absperrhahn
42 zweiter Messeingang
43 Absperrhahn
44 Fluidleitung
45 Strömungsgleichrichter
46 Fluidleitung
47 Verschluss
48 Düse / Drossel
49 Auswerte- und/oder Steuereinheit
50 Druckluftanlage
51 Gasmotor
52 Druckluftkompressor
53 Druckluftversorgungsleitung
54 Druckluftverbraucher
55 Heizkreislaufanordnung
56 Wärmeverbraucher
57 Druckluftausgang des Druckluftkompressors
58 Gasleitung
59 Gaszähler
60 erster Heizkreislauf
61 Wärmetauscher
62 zweiter Heizkreislauf
63 Temperatursensor
64 Temperatursensor
65 übergeordnete Steuerung
66 Wärmetauscher
67 Brenner
68 Abgasleitung des Kompressors
69 Abgasleitung des Brenners
70 Druckluftrückführung
71 Durchflusssensor
72 Prüfanschluss
73 Prüfanschluss
74 Strömungspfad des Strömungsgleichrichters
75 wellenförmiges Band des Strömungsgleichrichters
76 Längserstreckung des wellenförmigen Bands
77 Erhebung
78 Vertiefung
79 Zwischenband des Strömungsgleichrichters
80 Aufwickelrichtung
81 Haltering des Strömungsgleichrichters
82 Gehäuse des Strömungsgleichrichters
83 Spirale
84 Mittelachse der Spirale
85 Betätigungsausnehmung im ersten Gehäuseteil
86 Dichtungsring
87 Strömungskanal
88 Prüfanschluss
89 Prüfanschluss
90 Gehäuse

## Patentansprüche

1. Vorrichtung zur Differenzdruckmessung in einem strömenden Fluid, mit einem zwei koaxiale Öffnungen (7, 8) und einen Innenraum (29) aufweisenden Gehäuse (3), der durch die oder zumindest eine der Öffnungen (7, 8) zugänglich ist, einer in dem Gehäuse (3) angeordneten und einen Durchflusskanal (22) mit einer Querschnittsverengung (23) aufweisenden Messdüse, einem zwei Messeingänge (40, 42) aufweisenden Differenzdrucksensor (39), mittels welchem eine Differenz zwischen an den Messeingängen (40, 42) anstehenden Drücken messbar ist, wobei ein erster der Messeingänge (40) mit dem Durchflusskanal (22) und ein zweiter der Messeingänge (42) außerhalb der Messdüse mit dem Innenraum (29) in Verbindung steht, und einem die Messdüse umfassenden und in dem Gehäuse (3) um eine Drehachse (13) drehbar gelagerten Absperrkörper (12), mittels welchem in einer ersten Drehwinkelstellung der Durchflusskanal (22) an die beiden Öffnungen (7, 8) angeschlossen ist und in einer zweiten Drehwinkelstellung ein Durchfluss zwischen den beiden Öffnungen (7, 8) gesperrt ist, **dadurch gekennzeichnet, dass** in der Wandung (24) des Absperrkörpers (12) ein in den Durchflusskanal (22) einmündendes Druckentnahmeloch (25) vorgesehen ist, welches zumindest in der ersten Drehwinkelstellung mit einem zwischen dem Absperrkörper (12) und dem Gehäuse (3) vorgesehenen Freiraum (26) in Verbindung steht, an den der erste Messeingang (40) angeschlossen ist.

2. Vorrichtung nach Anspruch 1, **dadurch gekennzeichnet, dass** die Messdüse eine Venturi-Düse ist.

3. Vorrichtung nach Anspruch 1 oder 2, **dadurch gekennzeichnet, dass** der erste Messeingang (40) unter Zwischenschaltung des Freiraums (26) an das in den Durchflusskanal (22) einmündende Druckentnahmeloch (25) angeschlossen ist.

4. Vorrichtung nach einem der vorangehenden Ansprüche, **dadurch gekennzeichnet, dass** der Absperrkörper (12) zwischen zwei in dem Gehäuse (3) angeordneten Gleitringen (10, 11) sitzt und gleitfähig an diesen anliegt, wobei der Freiraum (26) zwischen den Gleitringen (10, 11) vorgesehen ist.

5. Vorrichtung nach einem der vorangehenden Ansprüche, **dadurch gekennzeichnet, dass** das Gehäuse (3) einen den Absperrkörper (12) aufnehmenden ersten Gehäuseteil (4) und einen den Absperrkörper (12) in dem ersten Gehäuseteil (4) sichernden zweiten Gehäuseteil (5) aufweist, der zumindest teilweise in dem ersten Gehäuseteil (4) angeordnet ist.

6. Vorrichtung nach Anspruch 5, **dadurch gekennzeichnet, dass** in der Wandung (27) des zweiten Gehäuseteils (5) ein in den Innenraum (29) einmündendes Druckentnahmeloch (28) vorgesehen ist, welches mit einem zwischen dem ersten Gehäuseteil (4) und dem zweiten Gehäuseteil (5) vorgesehenen Ringraum (18) in Verbindung steht, an den der zweite Messeingang (42) angeschlossenen ist.

7. Vorrichtung nach einem der vorangehenden Ansprüche, **dadurch gekennzeichnet, dass** in der Wandung (24) des Absperrkörpers (12) ein in den Durchflusskanal (22) einmündendes Sensoraufnahmeloch (36) vorgesehen ist, durch welches hindurch sich ein thermischer oder kalorimetrischer Durchflusssensor (37) in den Durchflusskanal (22) hinein erstreckt.

8. Vorrichtung nach Anspruch 7, **dadurch gekennzeichnet, dass** der Differenzdrucksensor (39) und der thermische oder kalorimetrische Durchflusssensor (37) an eine Auswerteeinheit (49) angeschlossen sind, mittels welcher ein mittels des thermischen oder kalorimetrischen Durchflusssensors (37) ermittelter Volumen- oder Normvolumenstrom durch einen mittels des Differenzdrucksensors (39) ermittelten Volumen- oder Normvolumenstrom verifizierbar ist und/oder ein mittels des Differenzdrucksensors (39) ermittelter Volumen- oder Normvolumenstrom durch einen mittels des thermischen oder kalorimetrischen Durchflusssensors (37) ermittelten Volumen- oder Normvolumenstrom verifizierbar ist.

9. Vorrichtung nach einem der vorangehenden Ansprüche, **gekennzeichnet durch** einen Strömungsgleichrichter (45), der unter Zwischenschaltung einer als Einlaufstrecke dienenden Fluidleitung (44) an eine der Öffnungen (7) angeschlossenen ist, wobei der zweite Messeingang (42) zwischen dieser Öffnung (7) und dem Absperrkörper (12) mit dem Innenraum (29) in Verbindung steht.

10. Vorrichtung nach einem der vorangehenden Ansprüche, **dadurch gekennzeichnet, dass** durch das Gehäuse (3) ein die Öffnungen (7, 8) und den Innenraum (29) umfassender Strömungskanal (87) hindurch verläuft, in dem der Absperrkörper (12) angeordnet ist, dessen Durchflusskanal (22) in der ersten Drehwinkelstellung in den Strömungskanal (87) geschaltet ist und in der zweiten Drehwinkelstellung quer zum Strömungskanal (87) verläuft, sodass dieser in der zweiten Drehwinkelstellung durch die Wandung (24) des Absperrkörpers (12) gesperrt ist.

11. Vorrichtung nach einem der vorangehenden Ansprüche, **dadurch gekennzeichnet, dass** der Absperrkörper (12) eine Kugel umfasst oder bildet, durch welche sich der Durchflusskanal (22) hindurch erstreckt.

## Claims

1. Device for differential pressure measurement in a flowing fluid, having a housing (3) having two coaxial openings (7, 8) and an interior (29), said housing being accessible by the or at least one of the openings (7, 8), a measuring nozzle arranged in the housing (3) and having a flow channel (22) having a cross-sectional constriction (23), a differential pressure sensor (39) having two measuring inlets (40, 42), by means of which differential pressure sensor a difference between pressures occurring at the measuring inlets (40, 42) is able to be measured, wherein a first of the measuring inlets (40) is connected to the flow channel (22) and a second of the measuring inlets (42) is connected to the interior (29) outside the measuring nozzle, and a shut-off body (12) comprising the measuring nozzle and mounted in the housing (3) to be rotatable about a rotational axis (13), by means of which shut-off body the flow channel (22) is connected to the two openings (7, 8) in a first rotation angle position and a flow between the two openings (7, 8) is blocked in a second rotation angle position, **characterised in that** a pressure tapping hole (25) discharging into the flow channel (22) is provided in the wall (24) of the shut-off body (12), which is connected to a clearance (26) provided between the shut-off body (12) and the housing (3) at least in the first rotation angle position, to which clearance the first measuring inlet (40) is connected.

2. Device according to Claim 1, **characterised in that** the measuring nozzle is a Venturi nozzle.

3. Device according to Claim 1 or 2, **characterised in that** the first measuring inlet (40) is connected to the pressure tapping hole (25) discharging into the flow channel (22), with interposition of the clearance (26).

4. Device according to any one of the preceding claims, **characterised in that** the shut-off body (12) sits between two slide rings (10, 11) arranged in the housing (3) and abuts onto these to be able to slide, wherein the clearance (26) is provided between the slide rings (10, 11).

5. Device according to any one of the preceding claims, **characterised in that** the housing (3) has a first housing part (4) receiving the shut-off body (12) and a second housing part (5) securing the shut-off body (12) in the first housing part (4), said second housing part being arranged at least partially in the first housing part (4).

6. Device according to Claim 5, **characterised in that** a pressure tapping hole (28) discharging into the interior (29) is provided in the wall (27) of the second housing part (5), said pressure tapping hole being connected to an annular space (18) provided between the first housing part (4) and the second housing part (5), to which annular space the second measuring inlet (42) is connected.

7. Device according to any one of the preceding claims, **characterised in that** a sensor receiving hole (36) discharging into the flow channel (22) is provided in the wall (24) of the shut-off body (12), through which sensor receiving hole a thermal or calorimetric flow sensor (37) extends into the flow channel (22).

8. Device according to Claim 7, **characterised in that** the differential pressure sensor (39) and the thermal or calorimetric flow sensor (37) are connected to an analysis unit (49), by means of which a volume or standard volume flow determined by means of the thermal or calorimetric flow sensor (37) is able to be verified by a volume or standard volume flow determined by means of the differential pressure sensor (39) and/or a volume or standard volume flow determined by means of the differential pressure sensor (39) is able to be verified by a volume or standard volume flow determined by means of the thermal or calorimetric flow sensor (37).

9. Device according to any one of the preceding claims, **characterised by** a flow straightener (45) which is connected to one of the openings (7), with interposition of a fluid line (44) serving as an inlet path, wherein the second measuring inlet (42) is connected to the interior (29) between this opening (7) and the shut-off body (12).

10. Device according to any one of the preceding claims, **characterised in that** a flow passage (87) comprising the openings (7, 8) and the interior (29) runs through the housing (3), in which flow passage the shut-off body (12) is arranged, the flow channel (22) of which is switched into the flow passage (87) in the first rotation angle position and runs transversely to the flow passage (87) in the second rotation angle position, such that this is blocked by the wall (24) of the shut-off body (12) in the second rotation angle position.

11. Device according to any one of the preceding claims, **characterised in that** the shut-off body (12) comprises or forms a ball, through which the flow channel (22) extends.

## Revendications

1. Dispositif de mesure de pression différentielle dans un fluide en écoulement, possédant un boîtier (3), comprenant deux ouvertures coaxiales (7, 8) et un espace interne (29), qui est accessible à travers les ou au moins une des ouvertures (7, 8), une buse de mesure disposée dans le boîtier (3) et comprenant un canal de passage (22) avec un rétrécissement de section (23), un capteur de pression différentielle (39) comprenant deux entrées de mesure (40, 42), permettant de mesurer une différence entre des pressions appliquées aux entrées de mesure (40, 42), une première des entrées de mesure (40) étant reliée au canal de passage (22) et une deuxième des entrées de mesure (42) étant reliée à l'extérieur de la buse de mesure avec l'espace interne (29), et un obturateur (12) comprenant la buse de mesure logé dans le boîtier (3), de manière rotative autour d'un axe de rotation (13), permettant, dans une position angulaire de rotation, de raccorder le canal de passage (22) aux deux ouvertures (7, 8) et, de bloquer, dans une deuxième position angulaire de rotation, un écoulement entre les deux ouvertures (7, 8), **caractérisé en ce que**, dans la paroi (24) de l'obturateur (12), se trouve un trou de prélèvement de pression (25) débouchant dans le canal de passage (22), qui est relié, dans la première position angulaire de rotation, à un espace libre (26), prévu entre l'obturateur (12) et le boîtier (3), auquel est raccordé la première entrée de mesure (40).

2. Dispositif selon la revendication 1, **caractérisé en ce que** la buse de mesure est une buse Venturi.

3. Dispositif selon la revendication 1 ou 2, **caractérisé en ce que** la première entrée de mesure (40) est raccordé au trou de prélèvement de pression (25) débouchant dans le canal de passage (22) par l'intercalation de l'espace libre (26).

4. Dispositif selon l'une des revendications précédentes, **caractérisé en ce que** l'obturateur (12) se trouve entre deux bagues coulissantes (10, 11) disposées dans le boîtier (3) et s'appuie de manière coulissante contre celles-ci, l'espace libre (26) étant prévu entre les bagues coulissantes (10, 11).

5. Dispositif selon l'une des revendications précédentes, **caractérisé en ce que** le boîtier (3) comprend une première partie de boîtier (4) logeant l'obturateur (12) et une deuxième partie de boîtier (5) fixant l'obturateur (12) dans la première partie de boîtier (4), qui est disposée au moins partiellement dans la première partie de boîtier (4).

6. Dispositif selon la revendication 5, **caractérisé en ce que**, dans la paroi (27) de la deuxième partie du boîtier (5), se trouve un trou de prélèvement de pression (28) débouchant dans l'espace interne (29), qui est relié à l'espace annulaire (18), prévu entre la première partie du boîtier (4) et la deuxième partie du boîtier (5), auquel la deuxième entrée de mesure (42) est raccordée.

7. Dispositif selon l'une des revendications précédentes, **caractérisé en ce que**, dans la paroi (24) de l'obturateur (12), se trouve un trou de logement de capteur (36), débouchant dans le canal de passage (22), à travers lequel s'étend un capteur de débit thermique ou calorimétrique (37) dans le canal de passage (22).

8. Dispositif selon la revendication 7, **caractérisé en ce que** le capteur de pression différentielle (39) et le capteur de débit thermique ou calorimétrique (37) sont connectés à une unité d'analyse (49), qui permet de vérifier un débit volumique normalisé ou un débit volumique déterminé au moyen du capteur de débit thermique ou calorimétrique (37) par un débit volumique normalisé ou un débit volumique déterminé au moyen du capteur de pression différentielle (39) et/ou de vérifier un débit volumique normalisé ou un débit volumique déterminé au moyen du capteur de pression différentielle (39) par un débit volumique normalisé ou un débit volumique déterminé au moyen du capteur de débit thermique ou calorimétrique (37).

9. Dispositif selon l'une des revendications précédentes, **caractérisé par** un stabilisateur d'écoulement (45) qui est raccordé à l'une des ouvertures (7) par l'intercalation d'une conduite de fluide (44) servant de tronçon d'entrée, la deuxième entrée de mesure (42) étant reliée à l'espace interne (29) entre cette ouverture (7) et l'obturateur (12).

10. Dispositif selon l'une des revendications précédentes, **caractérisé en ce que**, à travers le boîtier (3), s'étend un canal d'écoulement (87), comprenant les ouvertures (7, 8) et l'espace interne (29), dans lequel l'obturateur (12) est disposé, dont le canal de passage (22) est branché, dans la première position angulaire de rotation, dans le canal d'écoulement (87) et, dans la deuxième position angulaire de rotation, s'étend transversalement par rapport au canal d'écoulement (87), de façon à ce que celui-ci soit bloqué, dans la deuxième position angulaire de rotation, par la paroi (24) de l'obturateur (12).

11. Dispositif selon l'une des revendications précédentes, **caractérisé en ce que** l'obturateur (12) comprend ou constitue une sphère à travers laquelle s'étend le canal de passage (22).
